# EUROPÄISCHE PATENTSCHRIFT

(11) **EP 0 570 046 B1**
(45) Veröffentlichungstag und Bekanntmachung des Hinweises auf die Patenterteilung: **10.03.1999**
(21) Anmeldenummer: 93201220.6
(22) Anmeldetag: 27.04.1993
(51) Int. Cl.: C21C 5/56

(54) **Verfahren und Vorrichtung zur Herstellung von Stahlschmelzen**
Method and apparatus for producing steel melts
Procédé et appareil pour la production de fontes d'acier

(30) Priorität: 14.05.1992 DE 4215858
(43) Veröffentlichungstag der Anmeldung: 18.11.1993
(73) Patentinhaber: MANNESMANN Aktiengesellschaft, 40213 Düsseldorf (DE)
(72) Erfinder: Rollinger, Bernt, W-6204 Taunusstein (DE)
(74) Vertreter: Meissner, Peter E., Dipl.-Ing.

(56) Entgegenhaltungen:
- EP-A- 0 167 915
- EP-A- 0 236 868
- DE-A- 3 045 966
- DE-A- 3 542 829
- DE-A- 3 735 150
- PATENT ABSTRACTS OF JAPAN vol. 12, no. 22 (C-470)(2869) 22. Januar 1988 & JP-A-62 174 315 (DAIDO STEEL) 31. Juli 1987
- PATENT ABSTRACTS OF JAPAN vol. 12, no. 40 (C-474)(2887) 5. Februar 1988 & JP-A-62 188 716 (ISHIKAWAJIMA HARIMA HEAVY IND.) 18. August 1987
- Ironmaking and Steelmaking 6(9189)5, 303-313

## Beschreibung

Die Erfindung bezieht sich auf ein Verfahren zur Herstellung von Stahlschmelzen aus festen Eisenträgern.

Es ist bekannt, daß aus festen Eisenträgern - also aus Eisenschrott, Stahlschrott, festem Roheisen, Eisenschwamm und Mischungen dieser Stoffe - durch Schmelzen und gleichzeitiges oder nachfolgendes Frischen Stahlschmelzen erzeugt werden können. Die Wirtschaftlichkeit dieses Verfahrens ist insbesondere davon abhängig, daß die Schmelzwärme mit optimalem Wirkungsgrad auf die zu erschmelzenden festen Eisenträger bzw. das zum Einschmelzen verwendete Metallbad übertragen wird. Die Übertragung der Schmelzwärme erfolgt in bekannter Weise dadurch, daß elektrische Energie in das Schmelzbad eingebracht oder daß im Schmelzbad Kohlenstoff mit Sauerstoff verbrannt wird. Das Frischen der kohlenstoffhaltigen Schmelze bis zu einem Kohlenstoffgehalt von < 0,4 Gew.% erfolgt durch das Einblasen oder durch das Aufblasen von Sauerstoff oder mit Sauerstoff angereicherter Luft in bzw. auf die Schmelze. Das Frischen kann entweder nach dem Schmelzvorgang oder während des Schmelzvorgangs durchgeführt werden.

Aus der DE-OS 3 735 150 ist ein Verfahren zum Zuführen von Wärmeenergie in eine Metallschmelze bekannt, bei dem in ein die Metallschmelze aufnehmendes Schmelzgefäß fester Kohlenstoff und einzuschmelzende feste metallische Werkstoffe, vorzugsweise Stahlschrott, eingebracht und durch Unterbaddüsen in eine im Schmelzgefäß verbliebene Restschmelze oder in eine in das Schmelzgefäß chargierte Metallschmelze Sauerstoff eingeblasen wird. Bei diesem bekannten Verfahren ist vorgesehen, daß Kohlenstoff in Form von mit Blech ummantelten Kohlebriketts chargiert wird. Die DE-OS 3 045 966 offenbart ein Verfahren zum Frischen von Metallschmelzen, insbesondere von flüssigem Roheisen, in einem Siemens-Martin-Ofen, in einem Lichtbogenofen oder einem Konverter mittels eines unterhalb der Badoberfläche eingeleiteten sauerstoffhaltigen Gases. Die Einleitung des sauerstoffhaltigen Gases erfolgt durch Düsen, die aus mehreren konzentrischen Rohren bestehen, wobei durch das zentrale Rohr ein sauerstoffhaltiges Gas sowie durch das erste konzentrische Rohr ein Schutzfluid geführt wird und wobei als Schutzfluid gasförmige oder flüssige Kohlenwasserstoffe oder Wasser oder organische Hydroxylverbindungen verwendet werden.

Da alle bekannten Verfahren die dem Schmelzgefäß zugeführte Schmelzwärme nur mit ungenügendem Wirkungsgrad ausnutzen und daher insbesondere das Einschmelzen sehr großer Schrottmengen in einer bestimmten Zeit schwierig ist, liegt der Erfindung die Aufgabe zugrunde, ein Verfahren zur Herstellung von Stahlschmelzen zu schaffen, das insbesondere die Ausnutzung der Schmelzwärme erhöht und darüber hinaus eine umweltschonende Arbeitsweise gestattet.

Die der Erfindung zugrundeliegende Aufgabe wird dadurch gelöst,
a) daß die vorgewärmten festen Eisenträger sowie vorgewärmte feste, stückige Kohlenstoffträger in ein Schmelzgefäß chargiert und mit der durch einen Lichtbogen erzeugten Wärme unter Bildung einer Schmelze, die einen Kohlenstoffgehalt von 0,3 bis 2,0 Gew.% hat, eingeschmolzen werden,
b) daß anschließend in die kohlenstoffhaltige Schmelze vorgewärmte feste Eisenträger sowie vorgewärmte feste, stückige Kohlenstoffträger chargiert und mit der bei der Reaktion von Sauerstoff und Kohlenstoff gebildeten Wärme eingeschmolzen werden, wobei der Sauerstoff durch unterhalb der Schmelzbadoberfläche im Schmelzgefäß angeordnete Düsen in die Schmelze eingebracht wird und wobei das Frischen der Schmelze bis zu einem Kohlenstoffgehalt < 0,4 Gew.% erfolgt,
c) daß während der Zufuhr von Sauerstoff in die Schmelze ein sauerstoffhaltiges Gas oberhalb der Schmelzbadoberfläche in das Schmelzgefäß eingebracht wird,
d) daß das im Schmelzgefäß während der Verfahrensstufen a) und b) gebildete Abgas zur Vorwärmung der festen Eisenträger verwendet wird und
e) daß nach dem Frischen die Stahlschmelze dem Schmelzgefäß schlackenfrei entnommen wird.

Die Erfindung ist in Anspruch 1 definiert. Vorteilhafte Weiterbildungen der Erfindung sind in den Ansprüchen 2-14 angegeben.

Durch die erfindungsgemäße Kombination von zwei unterschiedlichen Schmelzvorgängen, von denen der eine ein Lichtbogenschmelzvorgang und der andere ein Konverterschmelzvorgang ist, wird eine besonders hohe Ausnutzung der insgesamt zugeführten Schmelzwärme bei weitgehender Vermeidung der Eisenoxidation erreicht. Zusätzlich wird die Energieausbeute noch dadurch verbessert, daß die bei den beiden Schmelzvorgängen gebildeten Abgase zur Vorwärmung der festen Eisenträger verwendet werden. Ein besonderer Vorteil des erfindungsgemäßen Verfahrens besteht darin, daß beim Wechsel zwischen den beiden Schmelzvorgängen kein CO in die Atmosphäre austreten kann, denn CO wird erst in der nach dem Konverterprinzip arbeitenden Schmelzstufe erzeugt. Durch das Einbringen eines sauerstoffhaltigen Gases gemäß der Verfahrensstufe c) wird zusätzliche Schmelzwärme erzeugt, denn das in der Schmelze gebildete CO verbrennt teilweise mit dem Sauerstoff zu CO₂.

In weiterer Ausgestaltung der Erfindung ist vorgesehen, daß die festen Eisenträger auf eine Temperatur von 500 bis 1200°C vorgewärmt sind. Durch diese Maßnahme wird die im Schmelzgefäß zu erzeugende Menge an Schmelzwärme in vorteilhafter Weise herabgesetzt.

Nach der Erfindung ist es besonders vorteilhaft, wenn als feste, stückige Kohlenstoffträger mit Stahlblech ummantelte Kohlebriketts verwendet werden, wobei die Kohlebriketts aus feinteiliger Kohle bestehen und wobei der Teilchendurchmesser der Kohle > 0 bis 12 mm beträgt. Diese an sich bekannten Maßnahmen gewährleisten beim erfindungsgemäßen Verfahren, daß der Kohlenstoffgehalt der festen Kohlenstoffträger nahezu quantitativ im Schmelzgefäß durch Oxidation zu CO und damit in Schmelzwärme umgewandelt wird, wobei das für die Ummantelung der Kohlebriketts verwendete Stahlblech die Zusammensetzung der Stahlschmelze nicht nachteilig beeinflußt. Als vorteilhaft hat es sich auch erwiesen, wenn die Kohlebriketts 10 bis 50 Gew.% feinteilige metallische Wärmeträger mit einem Teilchendurchmesser von 0,1 bis 10 mm enthalten. Als metallische Wärmeträger eignen sich insbesondere feinteilige Legierungen, wie Ferrosilizium, Magnesiumsilizid und Aluminiumlegierungen, wobei die Metalle Silizium, Magnesium und Aluminium noch als Desoxidationsmittel in der Schmelze wirken. Um die Gase austreten zu lassen, die bei der Erwärmung der Kohlebriketts entstehen, ist das zur Ummantelung der Kohlebriketts verwendete Stahlblech erfindungsgemäß nicht vollständig gasdicht ausgeführt; beispielsweise ist es mit Löchern versehen. Nach der Erfindung hat es sich ferner als besonders vorteilhaft erwiesen, wenn die mit Stahlblech ummantelten Kohlebriketts gemeinsam mit den festen Eisenträgern vorgewärmt werden, denn durch diese Maßnahme werden die Kohlebriketts im Vorwärmer getrocknet und entgast und mit den festen Eisenträgern optimal vermischt.

Nach der Erfindung ist auch vorgesehen, daß während der Verfahrensstufe b) in die kohlenstoffhaltige Schmelze feste, feinteilige, aschearme kohlenstoffhaltige Brennstoffe mit einem Teilchendurchmesser von 0,01 bis 1,5 mm durch unterhalb der Schmelzbadoberfläche im Schmelzgefäß angeordnete Düsen in die Schmelze eingetragen werden. Der Schmelze werden also neben den festen, stückigen Kohlenstoffträgern noch weitere feinteilige Kohlenstoffträger zugeführt, so daß die innerhalb der Schmelze vorhandene Kohlenstoffmenge sehr hoch ist und auf diese Weise eine sehr große Menge an festen Eisenträgern, insbesondere Schrott, ohne eine nachteilige Eisenoxidation eingeschmolzen werden kann.

Nach der Erfindung hat es sich als besonders vorteilhaft erwiesen, wenn der Sauerstoff und die festen, feinteiligen, aschearmen, kohlenstoffhaltigen Brennstoffe durch Düsen in die Schmelze eingebracht werden, die jeweils aus drei konzentrischen Rohren bestehen, wobei im zentralen Rohr die in einem inerten Gas suspendierten Brennstoffe, im mittleren Rohr der Sauerstoff und im äußeren Rohr Kühlmittel geführt werden. Die Kühlmittel bestehen vorzugsweise aus mit Trägergas fein dispergiertem Wasser, aus Kohlenwasserstoffen oder aus Mischungen von Wasser und Kohlenwasserstoffen. Als besonders vorteilhaft hat sich die Verwendung von Wasserdampf erwiesen. Die Verwendung von Mehrmanteldüsen ermöglicht eine schnelle Verbrennung der in das Schmelzbad eingebrachten Kohlenstoffträger, wobei die Verwendung von Wasser und Wasserdampf als Schutzfluid eine lange Standzeit der Düsen sichert. Außerdem ist es nach der Erfindung möglich, wenn der Sauerstoff und die festen, feinteiligen, aschearmen, kohlenstoffhaltigen Brennstoffe durch Düsen in die Schmelze eingebracht werden, die jeweils aus zwei konzentrischen Rohren bestehen, wobei im zentralen Rohr der Sauerstoff und im äußeren Rohr die in einem Kühlmittel und/oder einem inerten Gas suspendierten Brennstoffe geführt werden.

In weiterer Ausgestaltung der Erfindung ist vorgesehen, daß während der Verfahrensstufe c) als sauerstoffhaltiges Gas Luft, mit Sauerstoff angereicherte Luft oder Sauerstoff verwendet wird. Diese Gase können vorteilhaft in vorgewärmtem Zustand eingesetzt werden.

Entsprechend der Erfindung wird das Abgas des Schmelzgefäßes nach der Verwendung zur Vorwärmung der festen Eisenträger bei einer Temperatur < 850°C nachverbrannt, wobei der Nachverbrennung einerseits Luft, sauerstoffhaltige Luft oder Sauerstoff und andererseits ein Teilstrom des während der Verfahrensstufe b) gebildeten, CO-haltigen Abgases zugeführt wird. Eine derartige Verfahrensführung vermeidet mit Sicherheit, daß das in die Atmosphäre entlassene Abgas schädliche Bestandteile, wie z.B. CO und Dioxine, enthält.

Schließlich wird das erfindungsgemäße Verfahren dadurch weitergebildet, daß das während der Verfahrensstufe a) gebildete Abgas vor seiner Verwendung zur Vorwärmung der festen Eisenträger durch Zugabe von Luft und/oder Wasser auf eine Temperatur von 1100 bis 1300° gekühlt wird und daß das während der Verfahrensstufe b) gebildete CO-haltige Abgas während seiner Verwendung zur Vorwärmung der festen Eisenträger soweit verbrannt wird, daß es eine Temperatur von 1100 bis 1300°C hat. Auf diese Weise wird eine gleichmäßige Vorwärmung der festen Eisenträger und der festen, stückigen Kohlenstoffträger erreicht, wobei Überhitzungen bzw. unerwünscht tiefe Temperaturen im Vorwärmer nicht auftreten, obwohl die in den Verfahrensstufen a) und b) entstehenden Abgase unterschiedliche Eigenschaften haben.

Eine Vorrichtung zur Durchführung des Verfahrens ist dadurch gekennzeichnet, daß sie aus einem Vorwärmer für die festen Eisenträger, einer Abgashaube, einem schwenkbaren, mit mindestens einer Elektrode sowie einem Abgasauslaß versehenen Deckel, einem schwenkbaren, mit einem Abgasauslaß versehenen Verbrennungsraum und mindestens einem kippbaren Schmelzgefäß besteht, wobei das Schmelzgefäß einen Abstich, mindestens eine oberhalb der Schmelzbadoberfläche mündende Blaslanze und mindestens eine unterhalb der Schmelzbadoberfläche mündende sowie aus zwei oder drei konzentrischen Rohren bestehende Düse aufweist. Mit dieser Vorrichtung wird in vorteilhafter Weise eine störungsfreie Durchführung des erfindungsgemäßen Verfahrens erreicht, wobei insbesondere sichergestellt ist, daß kein CO in die Atmosphäre gelangen kann. Die schwenkbare Ausführung des Deckels für den Lichtbogenschmelzvorgang bzw. des Verbrennungsraums für den Konverterschmelzvorgang gestattet es, daß beide Schmelzvorgänge in einem Schmelzgefäß durchgeführt werden können. Ferner wird durch die Integration des Vorwärmers in die unterschiedlichen Betriebszustände des Schmelzgefäßes eine erhebliche Verbesserung der Energiebilanz der Gesamtanlage erreicht. Der Lichtbogenschmelzvorgang kann sowohl mit Wechsel- als auch mit Gleichstrom durchgeführt werden. Beim Einsatz von Wechselstrom ist der Deckel mit mindestens zwei Elektroden ausgerüstet, zwischen denen sich ein Lichtbogen ausbildet. Beim Einsatz von Gleichstrom besitzt der Deckel eine Elektrode, während die zweite Elektrode im Boden des Schmelzgefäßes angeordnet ist; zwischen den beiden Elektroden fließt der Gleichstrom über die Schmelze bzw. über einen mehr oder weniger deutlich ausgebildeten Lichtbogen.

Nach der Erfindung ist vorgesehen, daß mindestens eine Kammer des Vorwärmers einen Leerraum aufweist, in dem das in der Verfahrensstufe b) erzeugte CO-haltige Abgas soweit verbrannt wird, daß es eine Temperatur von 1100 bis 1300°C hat und damit auch während dieser Phase des Verfahrens eine gleichbleibende Vorwärmung der festen Eisenträger ermöglicht wird.

Ferner ist nach der Erfindung vorgesehen, daß dem Vorwärmer eine Nachverbrennungskammer nachgeschaltet ist, die über eine Leitung mit der Abgashaube verbunden ist. Durch diese Gestaltung der erfindungsgemäßen Vorrichtung wird erreicht, daß in der Nachbrennkammer unter Ausnutzung vom im Schmelzgefäß erzeugten CO die Aufrechterhaltung einer Temperatur von 850°C mit geringem Aufwand an Zusatzenergie gewährleistet ist, so daß die im Abgas enthaltenen Schadstoffe, insbesondere CO und Dioxine, vernichtet werden.

Schließlich kann die Vorrichtung dadurch weitergebildet werden, daß das Volumen des Verbrennungsraums 20 bis 50 % des Teilvolumens des Schmelzgefäßes beträgt, das sich oberhalb der Schmelzbadoberfläche befindet. Da während des Einblasens von Sauerstoff in die Schmelze durch Verbrennung des Kohlenstoffs, der in fester, stückiger Form und zusätzlich in feinteiliger Form in die Schmelze eingebracht wird, fast ausschließlich CO entsteht, verbrennt das CO oberhalb der Schmelzbadoberfläche, wodurch dem Schmelzbad zusätzliche Wärmeenergie zugeführt wird. In überraschender Weise hat sich gezeigt, daß die Ausnutzung der im freien Ofenraum erzeugten Wärme dann besonders groß ist, wenn das Volumen des Verbrennungsraums 20 bis 50 % des freien, nicht von der Schmelze erfüllten Teilvolumens des Schmelzgefäßes beträgt.

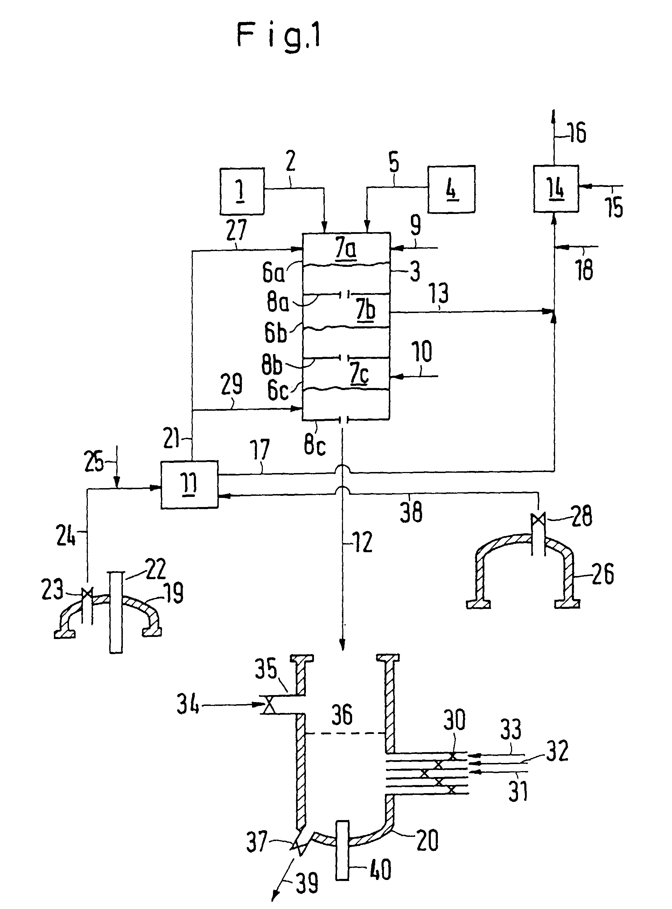

Der Gegenstand der Erfindung wird nachfolgend anhand der Zeichnung und eines Ausführungsbeispiels näher erläutert.

Aus dem Vorratsbunker 1 wird Stahlschrott über das Transportsystem 2 in den Vorwärmer 3 gefördert. Gleichzeitig werden aus dem Vorratsbunker 4 über das Transportsystem 5 stückige Kohlenstoffträger in den Vorwärmer 3 eingebracht. Als stückige Kohlenstoffträger werden mit Stahlblech ummantelte Kohlebriketts verwendet. Der Vorwärmer 3 besteht aus insgesamt drei Kammern 6a, 6b, 6c, die nur zu etwa 66 % mit Schrott gefüllt sind, so daß jede Kammer 6a, 6b, 6c einen Leerraum 7a, 7b, 7c aufweist. Die Kammern 6a, 6b, 6c weisen Böden 8a, 8b, 8c auf, die für den Gasdurchgang geeignete Öffnungen besitzen und die geöffnet werden können. Das Öffnen der Böden 8a, 8b, 8c erfolgt durch Ausfahren aus dem Vorwärmer 3 oder durch Wegklappen im Vorwärmer 3 selbst oder durch die Kombination der beiden Bewegungen. Während des Vorwärmvorgangs strömen die heißen Abgase vom Schmelzgefäß 20 über die Abgashaube 11 und die Leitungen 21, 27, 29 in den Vorwärmer 3 und werden dabei nach den gegebenen Druckverhältnissen in zwei Gasströme aufgeteilt. Ein Teilstrom durchströmt die Kammern 6a, 6b und der andere Teilstrom durchströmt die Kammer 6c. Beide Teilströme gelangen zunächst in die Leerräume 7a, 7c und werden dort teilweise verbrannt. Sie gelangen anschließend in den Leerraum 7b, aus dem sie abgesaugt werden. Die aus stückigen Kohlenstoffträgern und Stahlschrott bestehende Mischung wird von oben nach unten durch den Vorwärmer 3 geführt. Dies geschieht in der Weise, daß die in der ersten Kammer 6a befindliche Mischung aus Stahlschrott und Kohlenstoffträgern durch Öffnen des Bodens 8a in die Kammer 6b gelangt. Anschließend wird die erste Kammer 6a aus den Vorratsbunkern 1 und 4 erneut gefüllt. Danach wird der Boden 8b geöffnet, wodurch die in der zweiten Kammer 6b befindliche Mischung in die dritte Kammer 6c gelangt. Die Leerräume 7a, 7c dienen der Nachverbrennung eines Teils des Abgases, um im Vorwärmer 3 immer eine konstante Temperatur aufrecht zu erhalten. Den Leerräumen 7a, 7c wird daher über die Leitungen 9, 10 Verbrennungsluft zugeführt. Die vorgewärmte Mischung aus Stahlschrott und Kohlenstoffträgern verläßt den Vorwärmer 3 durch Kippen des Bodens 8c und wird über die Leitung 12 in das Schmelzgefäß 20 chargiert.

Das den Vorwärmer 3 verlassende abgekühlte Abgas gelangt über die Leitung 13 in die Nachverbrennungskammer 14, wo ständig eine Temperatur von > 850°C aufrecht erhalten wird. In der Nachverbrennungskammer 14, der über die Leitung 15 Luft zugeführt wird, erfolgt eine Zersetzung bzw. Oxidation der aus dem Vorwärmer 3 austretenden Schadstoffe. Das die Nachverbrennungskammer 14 über die Leitung 16 verlassende Abgas muß vor seiner Abgabe in die Atmosphäre lediglich abgekühlt und entstaubt werden. Die erforderliche Nachverbrennungstemperatur wird dadurch aufrecht erhalten, daß ein Teilstrom des während der Verfahrensstufe b) gebildeten Abgases über die Leitung 17 in die Nachverbrennungskammer 14 gelangt oder daß während der Durchführung der Verfahrensstufe a) ein gasförmiger Brennstoff über die Leitung 18 in die Nachverbrennungskammer 14 eingebracht wird.

Die erste Stufe a) des erfindungsgemäßen Verfahrens wird in der Weise durchgeführt, daß das Schmelzgefäß 20 über die Leitung 12 mit der vorgewärmten Mischung aus Eisenschrott und Kohlenstoffträgern gefüllt wird. Anschließend wird der schwenkbare Deckel 19 mit dem Schmelzgefäß 20 gasdicht verbunden.

Das Einschmelzen dieser Charge erfolgt durch elektrische Energie, die dem Schmelzgefäß 20 über die Elektrode 22 zugeführt wird. Die während des Elektroschmelzens gebildeten Abgase gelangen über den Abgasauslaß 23 des Deckels 19 und die Leitung 24 in die Abgashaube 11, von wo aus sie den Vorwärmer 3 durchströmen.

Die in der Leitung 24 geführten Abgase haben eine Temperatur von 1500 bis 1600°C und müssen daher durch Zugabe von Luft oder Wasser auf eine Temperatur von 1100 bis 1300°C abgekühlt werden. Das Kühlmittel wird über die Leitung 25 in die Leitung 24 eingebracht.

Nach Beendigung des Elektroschmelzvorgangs wird der Deckel 19 vom Schmelzgefäß 20 abgehoben und weggeschwenkt. Aus der letzten Kammer 6c des Vorwärmers 3 gelangt anschließend die vorgewärmte Mischung aus Stahlschrott und Kohlenstoffträgern über die Leitung 12 in das Schmelzgefäß 20. In gleicher Weise gelangt der Inhalt von Kammer 6b über Kammer 6c in das Schmelzgefaßt 20. Danach wird der Verbrennungsraum 26, der einen Abgasauslaß 28 besitzt, über das Schmelzgefaßt 20 geschwenkt und mit diesem verbunden. Der Stahlschrott wird dann gemäß Verfahrensstufe b) dadurch eingeschmolzen, daß über die im Schmelzgefäß 20 befindliche Düse 30, die unterhalb der Schmelzbadoberfläche 36 mündet, feine feste Kohlenstoffträger und Sauerstoff in das Metallbad eingeblasen werden. Die Düse 30 besteht aus drei konzentrischen Rohren, wobei durch das zentrale Rohr der feinteilige feste Brennstoff 31 und durch das mittlere Rohr der Sauerstoff 32 in die Schmelze gelangen. Durch das äußere Rohr der Düse 30 wird ein Kühlmittel 33 in die Schmelze eingeblasen. Während des Einblasens des feinkörnigen Brennstoffs und des Sauerstoffs in die Schmelze wird nicht nur Schmelzwärme, sondern auch in erheblicher Menge CO erzeugt. Das CO wird zumindest teilweise oberhalb der Schmelzbadoberfläche 36 im freien Ofenraum verbrannt, wobei der freie Ofenraum durch das nicht von der Schmelze eingenommene Volumen des Schmelzgefäßes 20 und das Volumen des Verbrennungsraums 26 gebildet wird. Oberhalb der Schmelzbadoberfläche 36 wird über die Blaslanze 35 sauerstoffhaltiges Gas 34 zugeführt. Das gebildete Abgas gelangt über den Auslaß 28, die Leitung 38 und die Abgashaube 11 in den Vorwärmer 3. Das während des Einblasens von Kohlenstoff und Sauerstoff in die Metallschmelze gebildete Abgas wird zum Teil über die Leitung 17 der Nachverbrennungskammer 14 zugführt.

Im Anschluß an den Einschmelzvorgang wird die im Schmelzgefäß 20 befindliche kohlenstoffhaltige Schmelze durch Einblasen von Sauerstoff über die Düse 30 gefrischt, so daß eine Stahlschmelze mit einem Kohlenstoffgehalt < 0,4 % resultiert. Das beim Frischen gebildete Abgas wird ebenfalls im freien Ofenraum mit Sauerstoff nachverbrannt und anschließend über die Leitung 38 sowie die Abgashaube 11 in den Vorwärmer 3 eingebracht.

Nach Beendigung des Frischens wird die Stahlschmelze 39 über den Abstich 37 aus dem kippbaren Schmelzgefäß 20 abgeführt. Das Schmelzgefäß 20 wird danach erneut mit einer Charge aus Stahlschrott und stückigen Kohlenstoffträgern gefüllt sowie mit dem Deckel 19 verschlossen. Im Boden des Schmelzgefäßes 20 ist eine Elektrode 40 angeordnet, die mit der Elektrode 22 zusammenwirkt.

Es ist auch möglich, mehrere Schmelzgefäße 20 gleichzeitig zu betreiben, wobei diese Schmelzgefäße mit einem Vorwärmer 3 verknüpft sind. Auf diese Weise vermischen sich die in den Verfahrensstufen a) und b) gebildeten Abgase, so daß immer eine gleichmäßige Abgaszusammensetzung resultiert und die Zufuhr von zusätzlichem gasförmigen Brennstoff über die Leitung 18 in die Nachverbennungskammer 14 überflüssig ist.

## Patentansprüche

1. Verfahren zur Herstellung von Stahlschmelzen aus festen Eisenträgern, bei dem
a) die vorgewärmten festen Eisenträger sowie vorgewärmte feste, stückige Kohlenstoffträger in ein Schmelzgefäß chargiert und mit der durch einen Lichtbogen erzeugten Wärme unter Bildung einer Schmelze, die einen Kohlenstoffgehalt von 0,3 bis 2,0 Gewichtsprozent hat, eingeschmolzen werden,
b) anschließend in die kohlenstoffhaltige Schmelze vorgewärmte feste Eisenträger sowie vorgewärmte feste, stückige Kohlenstoffträger chargiert und mit der bei der Reaktion von Sauerstoff und Kohlenstoff gebildeten Wärme eingeschmolzen werden, wobei der Sauerstoff durch unterhalb der Schmelzbadoberfläche in der Schmelzgefäßseitenwandung angeordnete Düsen in die Schmelze eingebracht wird und wobei das Frischen der Schmelze bis zu einem Kohlenstoffgehalt < 0,4 Gewichtsprozent erfolgt,
c) während der Zufuhr von Sauerstoff in die Schmelze ein sauerstoffhaltiges Gas oberhalb der Schmelzbadoberfläche in das Schmelzgefäß eingebracht wird,
d) das im Schmelzgefäß während der Verfahrensstufen a) und b) gebildete Abgas zur Vorwärmung der festen Eisenträger verwendet wird und
e) nach dem Frischen die Stahlschmelze dem Schmelzgefäß schlackenfrei entnommen wird.

2. Verfahren nach Anspruch 1, dadurch gekennzeichnet, daß die festen Eisenträger auf eine Temperatur von 500 bis 1200°C vorgewärmt sind.

3. Verfahren nach den Ansprüchen 1 bis 2, dadurch gekennzeichnet, daß als feste, stückige Kohlenstoffträger mit Stahlblech ummantelte Kohlebriketts verwendet werden.

4. Verfahren nach Anspruch 3, dadurch gekennzeichnet, daß die Kohlebriketts aus feinteiliger Kohle bestehen, wobei der Teilchendurchmesser der Kohle > 0 bis 12 mm beträgt.

5. Verfahren nach Anspruch 3, dadurch gekennzeichnet, daß die Kohlebriketts 10 bis 50 Gew.% feinteilige metallische Wärmeträger mit einem Teilchendurchmesser von 0,1 bis 10 mm enthalten.

6. Verfahren nach Anspruchen 3, dadurch gekennzeichnet, daß das Stahlblech nicht vollständig gasdicht ausgeführt ist.

7. Verfahren nach den Ansprüchen 3 bis 6, dadurch gekennzeichnet, daß die mit Stahlblech ummantelten Kohlebriketts gemeinsam mit den festen Eisenträgern vorgewärmt werden.

8. Verfahren nach den Ansprüchen 1 bis 7, dadurch gekennzeichnet, daß während der Verfahrensstufe b) in die kohlenstoffhaltige Schmelze feste, feinteilige, aschearme kohlenstoffhaltige Brennstoffe mit einem Teilchendurchmesser von 0,01 bis 1,5 mm durch unterhalb der Schmelzbadoberfläche im Schmelzgefäß angeordnete Düsen in die Schmelze eingetragen werden.

9. Verfahren nach den Ansprüchen 1 bis 8, dadurch gekennzeichnet, daß der Sauerstoff und die festen, feinteiligen, aschearmen, kohlenstoffhaltigen Brennstoffe durch Düsen in die Schmelze eingebracht werden, die jeweils aus drei konzentrischen Rohren bestehen, wobei im zentralen Rohr die in einem inerten Gas suspendierten Brennstoffe, im mittleren Rohr der Sauerstoff und im äußeren Rohr Kühlmittel geführt werden.

10. Verfahren nach den Ansprüchen 1 bis 8, dadurch gekennzeichnet, daß der Sauerstoff und die festen, feinteiligen, aschearmen, kohlenstoffhaltigen Brennstoffe durch Düsen in die Schmelze eingebracht werden, die jeweils aus zwei konzentrischen Rohren bestehen, wobei im zentralen Rohr der Sauerstoff und im äußeren Rohr die in einem Kühlmittel und/oder einem inerten Gas suspendierten Brennstoffe geführt werden.

11. Verfahren nach den Ansprüchen 1 bis 10, dadurch gekennzeichnet, daß während der Verfahrensstufe c) als sauerstoffhaltiges Gas Luft, mit Sauerstoff angereicherte Luft oder Sauerstoff verwendet wird.

12. Verfahren nach den Ansprüchen 1 bis 11, dadurch gekennzeichnet, daß das Abgas des Schmelzgefäßes nach der Verwendung zur Vorwärmung der festen Eisenträger bei einer Temperatur > 850°C nachverbrannt wird, wobei der Nachverbrennung einerseits Luft, sauerstoffhaltige Luft oder Sauerstoff und andererseits ein Teilstrom des während der Verfahrensstufe b) gebildeten, CO-haltigen Abgases zugeführt wird.

13. Verfahren nach den Ansprüchen 1 bis 12, dadurch gekennzeichnet, daß das während der Verfahrensstufe a) gebildete Abgas vor seiner Verwendung zur Vorwärmung der festen Eisenträger durch Zugabe von Luft und/oder Wasser auf eine Temperatur von 1100 bis 1300°C gekühlt wird.

14. Verfahren nach den Ansprüchen 1 bis 12, dadurch gekennzeichnet, daß das während der Verfahrensstufe b) gebildete, CO-haltige Abgas während seiner Verwendung zur Vorwärmung der festen Eisenträger soweit verbrannt wird, daß es eine Temperatur von 1100 bis 1300°C hat.

## Claims

1. A process for producing steel melts from solid iron sources, wherein
a) the preheated solid iron sources and preheated solid, lumpy carbon sources are charged into a melting vessel and melted down by means of the heat generated by an arc to form a melt with a carbon content of from 0.3 to 2.0 wt.%,
b) thereafter preheated solid iron sources and preheated solid, lumpy carbon sources are charged into the carbon-containing melt and melted down by means of the heat formed during the oxygen and carbon reaction, the oxygen being introduced into the melt via nozzles arranged in the melting vessel side walls below the molten bath surface and fining of the melt being effected to a carbon content < 0.4 wt.%,
c) during the supplying of oxygen into the melt, an oxygen-containing gas is introduced into the melting vessel above the molten bath surface,
d) the exhaust gas formed in the melting vessel during process stages a) and b) is used to preheat the solid iron sources and
e) after fining, the steel melt is removed from the melting vessel in a slag-free state.

2. A process according to claim 1, characterised in that the solid iron sources are preheated to a temperature of from 500 to 1200 °C.

3. A process according to claims 1 to 2, characterised in that the solid, lumpy carbon sources take the form of coal briquettes clad with sheet steel.

4. A process according to claim 3, characterised in that the coal briquettes consist of fine-particle coal, wherein the particle diameter of the coal amounts to > 0 to 12 mm.

5. A process according to claim 3, characterised in that the coal briquettes contain from 10 to 50 wt.% of fine-particle metallic heat transfer media with a particle diameter of 0.1 to 10 mm.

6. A process according to claim 3, characterised in that the sheet steel is so constructed that it is not fully gas-tight.

7. A process according to any one of claims 3 to 6, characterised in that the coal briquettes clad with sheet steel are preheated together with the solid iron sources.

8. A process according to any one of claims 1 to 7, characterised in that, during process stage b), solid, fine-particle, low-ash carbon-containing fuels with a particle diameter of from 0.01 to 1.5 mm are introduced into the carbon-containing melt through nozzles arranged in the melting vessel below the molten bath surface.

9. A process according to any one of claims 1 to 8, characterised in that the oxygen and the solid, fine-particle, low-ash, carbon-containing fuels are introduced into the melt by means of nozzles which each consist of three concentric tubes, wherein the fuels suspended in an inert gas are conveyed in the central tube, the oxygen is conveyed in the middle tube and coolant is conveyed in the outer tube.

10. A process according to any one of claims 1 to 8, characterised in that the oxygen and the solid, fine-particle, low-ash, carbon-containing fuels are introduced into the melt via nozzles which each consist of two concentric tubes, wherein the oxygen is conveyed in the central tube and the fuels suspended in a coolant and/or an inert gas are conveyed in the outer tube.

11. A process according to any one of claims 1 to 10, characterised in that air, oxygen-enriched air or oxygen are used as the oxygen-containing gas during process stage c).

12. A process according to any one of claims 1 to 11, characterised in that the exhaust gas from the melting vessel is burned at a temperature > 850°C after being used to preheat the solid iron sources, wherein on the one hand air, oxygen-containing air or oxygen and on the other hand a partial stream of the CO-containing exhaust gas formed during process stage b) are supplied for said after-burning.

13. A process according to any one of claims 1 to 12, characterised in that the exhaust gas formed during process stage a) is cooled by the addition of air and/or water to a temperature of from 1100 to 1300°C prior to being used for preheating the solid iron sources.

14. A process according to any one of claims 1 to 12, characterised in that the CO-containing exhaust gas formed during process stage b) is burned during its use for preheating the solid iron sources to the extent that it has a temperature of from 1100 to 1300°C.

## Revendications

1. Procédé pour fabriquer de l'acier en fusion à partir de matières à base de fer solides, dans lequel :
a) les matières à base de fer solides préchauffées, ainsi que des morceaux de carbone solides préchauffés, sont chargés dans un récipient de fusion et sont fondus par la chaleur engendrée par un arc électrique en formant une matière en fusion qui présente une teneur en carbone ayant un pourcentage pondéral de 0,3 à 2,0,
b) ensuite, dans la matière en fusion contenant du carbone, des matières à base de fer solides préchauffées, ainsi que des morceaux de carbone solides préchauffés, sont chargés et sont fondus par la chaleur engendrée lors de la réaction de l'oxygène et du carbone, l'oxygène étant appliqué dans la matière fondue par des buses agencées au-dessous de la surface du bain de matière fondue dans la paroi latérale du récipient de fusion et la décarburation de la matière en fusion ayant lieu jusqu'à une teneur en carbone <0,4 % en poids,
c) pendant l'amenée d'oxygène dans la matière en fusion, un gaz contenant de l'oxygène est appliqué au-dessus de la surface du bain de matière fondue dans le récipient de fusion,
d) le gaz d'échappement formé dans le récipient de fusion pendant les étapes de procédé a) et b) est utilisé pour le préchauffage des matières à base de fer solides, et
e) après la décarburation, l'acier en fusion est retiré du récipient de fusion en étant dépourvu de scories.

2. Procédé selon la revendication 1,
caractérisé en ce que les matières à base de fer solides sont préchauffées à une température de 500 à 1200°C.

3. Procédé selon les revendications 1 à 2,
caractérisé en ce que, comme morceaux de carbone solides, on utilise des briquettes de charbon enveloppées d'une tôle d'acier.

4. Procédé selon la revendication 3,
caractérisé en ce que les briquettes de charbon sont constituées de charbon en fines particules, le diamètre des particules de charbon valant de 0 à 12 mm.

5. Procédé selon la revendication 3,
caractérisé en ce que les briquettes de charbon contiennent de 10 à 50% en poids de caloporteur métallique en fines particules ayant un diamètre de particules de 0,1 à 10 mm.

6. Procédé selon la revendication 3,
caractérisé en ce que la tôle d'acier est réalisée de façon non totalement étanche aux gaz.

7. Procédé selon les revendications 3 à 6,
caractérisé en ce que les briquettes de charbon enveloppées d'une tôle d'acier sont préchauffées en même temps que les matières à base de fer solides.

8. Procédé selon les revendications 1 à 7,
caractérisé en ce que, pendant l'étape de procédé b), dans la matière en fusion contenant du carbone, sont introduits des combustibles contenant du carbone, pauvres en cendres, en fines particules, solides, ayant un diamètre de particules de 0,01 à 1,5 mm par des buses agencées au-dessous de la surface du bain de matière fondue dans le récipient de fusion, dans la matière en fusion.

9. Procédé selon les revendications 1 à 8,
caractérisé en ce que l'oxygène et les combustibles contenant du carbone, pauvres en cendres, en fines particules, solides, sont introduits dans la matière en fusion par des buses qui sont constituées, à chaque fois, de trois tubes concentriques, les combustibles suspendus dans un gaz inerte étant guidés dans le tube central, l'oxygène dans le tube médian, et le fluide de refroidissement dans le tube externe.

10. Procédé selon les revendications 1 à 8,
caractérisé en ce que l'oxygène et les combustibles contenant du carbone, pauvres en cendres, en fines particules, solides, sont introduits dans la matière en fusion par des buses qui sont constituées, à chaque fois, de deux tubes concentriques, l'oxygène étant guidé dans le tube central et, dans le tube externe, les combustibles suspendus dans un fluide de refroidissement et/ou un gaz inerte.

11. Procédé selon les revendications 1 à 10,
caractérisé en ce que, pendant l'étape de procédé c), comme gaz contenant de l'oxygène, on utilise de l'air, de l'air enrichi en oxygène ou de l'oxygène.

12. Procédé selon les revendications 1 à 11,
caractérisé en ce que le gaz d'échappement du récipient de fusion après son utilisation pour le préchauffage des matières à base de fer solides est encore brûlé à une température supérieure à 850°C, d'une part de l'air, de l'air contenant de l'oxygène ou de l'oxygène et, d'autre part, un courant partiel du gaz d'échappement contenant du CO, formé pendant l'étape de procédé b), étant amenés à la combustion ultérieure.

13. Procédé selon les revendications 1 à 12,
caractérisé en ce que le gaz d'échappement formé pendant l'étape de procédé a), avant son utilisation pour le préchauffage des matières à base de fer solides, est refroidi par addition d'air et/ou d'eau à une température de 1100 à 1300°C.

14. Procédé selon les revendications 1 à 12,
caractérisé en ce que le gaz d'échappement contenant du CO, formé pendant l'étape de procédé b), est brûlé pendant son utilisation pour le préchauffage des matières à base de fer solides jusqu'à ce qu'il présente une température de 1100 à 1300°C.
